# FASCICULE DE BREVET EUROPEEN

(11) **EP 4 073 163 B1**
(45) Date de publication et mention de la délivrance du brevet: **07.02.2024**
(21) Numéro de dépôt: 20841999.4
(22) Date de dépôt: 08.12.2020
(51) Int. Cl.: C08K 5/13, C08K 5/42, C08K 5/5317

(54) **SYSTÈME DE RÉTICULATION ET COMPOSITION DE CAOUTCHOUC DIÉNIQUE LE COMPRENANT**
VERNETZUNGSSYSTEM UND DIESES ENTHALTENDE DIENKAUTSCHUKZUSAMMENSETZUNG
CROSSLINKING SYSTEM, AND DIENE RUBBER COMPOSITION COMPRISING SAME

(30) Priorité: 12.12.2019 FR 1914235
(43) Date de publication de la demande: 19.10.2022
(73) Titulaire: COMPAGNIE GENERALE DES ETABLISSEMENTS MICHELIN, 63000 Clermont-Ferrand (FR)
(72) Inventeur: JEAN-BAPTISTE-DIT-DOMINIQUE, François, 63040 CLERMONT-FERRAND Cedex 9 (FR); JASSELIN, Adeline, 63040 CLERMONT-FERRAND Cedex 9 (FR)
(74) Mandataire: M.F.P. Michelin
(86) Numéro de dépôt international: PCT/FR2020/052326
(87) Numéro de publication internationale: WO 2021/116586

(56) Documents cités:
- WO-A1-2019/122587

## Description

### Domaine technique

La présente invention est relative aux systèmes de réticulation permettant de réticuler des compositions de caoutchouc diénique utilisables notamment pour la fabrication de pneus ou de produits semi-finis pour pneus, ainsi qu'aux compositions de caoutchouc comprenant lesdits systèmes de réticulation.

### Technique antérieure

Il est connu, et habituel depuis de nombreuses années, d'utiliser dans des pneus des compositions de caoutchouc dont la matrice élastomère est réticulée au soufre, cette réticulation est alors nommée vulcanisation. Le système de vulcanisation classique combine généralement du soufre et au moins un accélérateur de vulcanisation. Une des raisons de l'utilisation de ce type de composés est de réduire le temps de séjour des pneus dans les presses de cuisson lors de leur fabrication. Accélérer le temps de vulcanisation des compositions de caoutchouc palie un temps d'occupation des presses trop long et donc des cycles de production plus longs, ce qui a pour effet d'améliorer la productivité des sites de fabrication de pneumatique.

Pour réduire encore le temps de séjour dans les presses, il est également connu d'utiliser un accélérateur de vulcanisation des élastomères diéniques, tel que la diphénylguanidine. D'autres composés se sont vus ajoutés aux systèmes de vulcanisation au cours du temps pour améliorer les propriétés des compositions de caoutchouc les contenant, ainsi que leur fabrication. Ainsi, les compositions de caoutchouc sont devenues complexes et comprennent des systèmes de vulcanisation contenant en plus du soufre, ou d'un agent donneur de soufre, des accélérateurs de vulcanisation, des activateurs, et éventuellement des retardateurs de vulcanisation.

L'objectif que se sont fixés les Inventeurs est de réduire le temps de séjour des pneus dans la presse de cuisson sans pour autant complexifier les compositions de caoutchouc qui constituent les éléments des pneus.

Les Inventeurs poursuivant leurs recherches ont trouvé une solution pour résoudre cette problématique. Les Inventeurs ont à présent mis au point une composition de caoutchouc particulière, utilisable pour la fabrication de pneus, pouvant être préparée de manière simplifiée par rapport à une composition comprenant un système de vulcanisation classique, et pouvant présenter une cinétique de réticulation satisfaisante et suffisante pour avoir un impact sur le temps de séjour de pneus la contenant dans les presses de cuisson et notamment sur leur temps de cuisson . En effet, les Inventeurs ont découvert qu'il existe un système de réticulation qui permet d'atteindre des cinétiques de réticulation très intéressantes pour une composition de caoutchouc.

### Résumé de l'invention

L'invention a pour objet un système de réticulation selon les revendications 1-9 et une composition de caoutchouc selon les revendications 10-15. L'invention ainsi que ses avantages seront aisément compris à la lumière de la description et des exemples de réalisation qui suivent.

### Description détaillée

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères.

Au contraire, un composé « minoritaire » est un composé qui ne représente pas la fraction massique la plus grande parmi les composés du même type.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à une fonction (ou radical) «phosphonique », on entend au sens de la présente invention, la fonction « acide phosphonique » et la fonction « hémiester d'acide phosphonique ».

Par fonction « acide phosphonique », on entend au sens de la présente invention une fonction qui répond à la formule 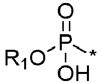 R1= H et -* représentant la liaison vers le reste de la molécule portant la fonction phosphonique.

Par fonction « hemiester d'acide phosphonique », on entend au sens de la présente invention, une fonction qui répond à la formule 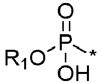 R1= alkyle et -* représentant la liaison vers le reste de la molécule portant la fonction phosphonique.

Lorsqu'on fait référence à la fonction (ou radical) sulfonique, on entend au sens de la présente invention, la fonction « acide sulfonique » 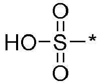 -* représentant la liaison vers le reste de la molécule portant la fonction phosphonique

### Système de réticulation

Ce système de réticulation selon l'invention comprend au moins un composé polyacide choisi parmi les composés poly-hémiphosphoester s de formule générale (I) et les polyacides sulfoniques de formule générale (II). Par « comprend au moins un », il faut comprendre « comprend un ou plusieurs» ; lorsqu'il s'agit de « plusieurs », les composés peuvent constitués un mélange de composés poly-hémiphosphoesters de formule générale (I), un mélange de polyacides sulfoniques de formule générale (II) ou un mélange d'au moins un composé poly-hémiphosphoester de formule générale (I) et d'au moins un polyacide sulfonique de formule générale (II).

Le composé poly-hémiphosphoester utile pour les besoins de l'invention est un composé poly-hémiphosphoester de formule générale (I) 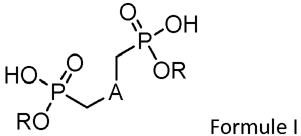 dans laquelle
- A représente une liaison covalente ou un groupement hydrocarboné comportant au moins 1 atome de carbone, éventuellement substitué et éventuellement interrompu par un ou plusieurs hétéroatomes, et
- les R représentent, indépendamment l'un de l'autre, un atome d'hydrogène ou un groupement alkyle comportant au moins 1 atome de carbone.

Préférentiellement, l'invention a pour objet une composition de caoutchouc telle que définie ci-dessus dans laquelle A représente une liaison covalente ou un groupement divalent hydrocarboné comportant au moins 1, de préférence au moins 2, plus préférentiellement au moins 4 atomes de carbone. Préférentiellement également lorsque A représente un groupement divalent hydrocarboné, A représente un groupement divalent hydrocarboné comportant au plus 1800 atomes de carbone, de préférence au plus 100 atomes de carbone, plus préférentiellement au plus 65 atomes de carbone, plus préférentiellement encore au plus 30 atomes de carbone. De manière encore plus préférentielle, A représente une liaison covalente ou un groupement divalent hydrocarboné comportant de 4 à 65 atomes de carbone, de préférence de 4 à 30 atomes de carbone.

Préférentiellement également, dans le composé de formule générale (I), A est un groupement hydrocarboné divalent aliphatique ou un groupement divalent aromatique, ou un groupement divalent comportant au moins une partie aliphatique et une partie aromatique.

Dans le composé de formule générale (I), A peut être interrompu par au moins un hétéroatome choisi parmi l'oxygène, l'azote et le soufre, de préférence l'oxygène.

Egalement dans le composé de formule générale (I), A peut être substitué par exemple par au moins un radical choisi parmi les radicaux hydroxyle, alkyle, cycloalkyle, aryle, aralkyle, alkoxy. Egalement dans le composé de formule générale (I), A peut être substitué par une fonction phosphonique.

Selon un mode de réalisation préférentiel, A ne comporte pas d'autre fonction phosphonique. Le composé organo polyphosphoré est alors un composé organo biphosphoré. Le polyacide est alors un diacide.

Selon un autre mode de réalisation préférentiel, dans le composé de formule générale (I), A est un groupement divalent de type aliphatique ou un groupement divalent de type aromatique ou un groupement divalent comportant au moins une partie aliphatique et une partie aromatique, lequel groupement est ou non interrompu par au moins un atome d'oxygène. Plus préférentiellement alors le composé de formule générale (I) ne comporte pas d'autre fonction phosphonique.

Selon un mode de réalisation particulier, dans le composé de formule générale (I), A est un groupement hydrocarboné divalent aromatique, ou un groupement divalent comportant au moins une partie aliphatique et une partie aromatique. De préférence alors, le groupement hydrocarboné divalent aromatique ou la partie aromatique du groupement divalent comportant au moins une partie aliphatique comporte au moins 6 atomes de carbone et au plus 18 atomes de carbone, de préférence 6 atomes de carbone. De préférence encore, A ne comporte pas d'autre fonction phosphonique. Plus préférentiellement encore, A est un groupement aromatique divalent non substitué comprenant 6 atomes de carbone.

Préférentiellement, dans le composé de formule générale (I), les R représentent, indépendamment l'un de l'autre, un atome d'hydrogène ou un groupement alkyle ayant de 1 à 20 atomes de carbone, de préférence de 1 à 12 atomes de carbone, ou un groupement cycloalkyle ayant de 5 à 24 atomes de carbone, ou encore un groupement aryle ayant de 6 à 30 atomes de carbone ou un groupement aralkyle ayant de 7 à 25 atomes de carbone. Préférentiellement, les R représentent un groupement alkyle ayant de 1 à 12 atomes de carbone, plus préférentiellement encore ayant de 1 à 4 atomes de carbone.

De préférence également, les R sont identiques.

Plus préférentiellement, les R représentent un groupement alkyle ayant de 1 à 12 atomes de carbone, préférentiellement encore ayant de 1 à 4 atomes de carbone. Plus préférentiellement, les R sont identiques et représentent un groupement alkyle ayant de 1 à 12 atomes de carbone préférentiellement encore ayant de 1 à 4 atomes de carbone.

Selon un mode de réalisation très particulier, dans le composé de formule générale (I), A est un groupement divalent de type aromatique non substitué ne comportant pas d'autre fonction phosphonique de préférence comportant de 6 à 12 atomes de carbone, de préférence 6, et les R sont identiques et représentent un groupement alkyle ayant de 1 à 4 atomes de carbone.

Le composé polyacide sulfonique utile pour les besoins de l'invention est un composé polyacide sulfonique de formule générale (II) : 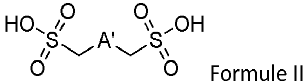 dans laquelle
- A' représente une liaison covalente ou un groupement hydrocarboné comportant au moins 1 atome de carbone, éventuellement substitué et éventuellement interrompu par un ou plusieurs hétéroatomes.

Préférentiellement, A' représente une liaison covalente ou un groupement divalent hydrocarboné comportant au moins 1, de préférence au moins 2, plus préférentiellement au moins 4 atomes de carbone. Préférentiellement également lorsque A' représente un groupement divalent hydrocarboné, A' représente un groupement divalent hydrocarboné comportant au plus 1800 atomes de carbone, de préférence au plus 100 atomes de carbone, plus préférentiellement au plus 65 atomes de carbone, plus préférentiellement encore au plus 30 atomes de carbone. De manière encore plus préférentielle, A' représente une liaison covalente ou un groupement divalent hydrocarboné comportant de 1 à 65 atomes de carbone, de préférence de1 à 30 atomes de carbone.

Préférentiellement également, dans le composé de formule générale (II), lorsque A' représente un groupement divalent hydrocarboné, A' est un groupement hydrocarboné divalent aliphatique ou un groupement hydrocarboné divalent aromatique, ou un groupement divalent comportant au moins une partie aliphatique et une partie aromatique. Dans le composé de formule générale (II), A' peut être interrompu par au moins un hétéroatome choisi parmi l'oxygène, l'azote et le soufre, de préférence l'oxygène.

Egalement dans le composé de formule générale (II), lorsque A' représente un groupement divalent hydrocarboné, A' peut être substitué par au moins un radical choisi parmi les radicaux hydroxyle, alkyle, cycloalkylalkyle, aryle, aralkyle, hydroxyle, alkoxy, amino et carbonyle. Egalement dans le composé de formule générale (I), A peut être substitué par une fonction sulfonique.

Selon un mode de réalisation préférentiel, A' ne comporte pas d'autre fonction sulfonique. Le composé polyacide sulfonique est alors un composé diacide sulfonique.

Selon un mode de réalisation de l'invention, A' est une liaison covalente.

Dans la présente description les radicaux alkyles ont de 1 à 15, préférentiellement de 1 à 10, très préférentiellement de 1 à 4 atomes de carbone. Dans la présente description les radicaux aryles ont de 6 à 18, préférentiellement de 6 à 14 atomes de carbone.

Dans les définitions précédentes, n est un entier, avantageusement compris entre 1 et 15, préférentiellement entre 1 et 10, très préférentiellement entre 1 et 5, et de manière préférée entre 1 et 3.

Les composés poly-hémiphosphoesters utiles pour les besoins de l'invention sont soit disponibles dans le commerce, soit facilement préparés par l'homme de l'art selon des techniques bien connues telles que les voies chimiques décrites par exemple dans le document Yufeng Li et al., Molecules 2015, 20, 14435-14450; doi:10.3390/molecules200814435.

Par exemple, à titre de composés poly-hémiphosphoesters utiles pour les besoins de l'invention, on peut citer l'acide phosphonique [1,4-phénylenebis(methylene)]bis-P,P'-diethylester (N° CAS 4546-05-8), l'acide phosphonique [1,1'-oxybisethyl]bis-P,P'-dihexylester (N° CAS 856638-06-7), l'acide phosphonique [1,12 dodécanediyl]bis-P,P'-diethylester (N° CAS 1229230-54-9) ;

Par exemple, à titre de composés polyacides sulfoniques utiles pour les besoins de l'invention, on peut citer l'acide 1,2-Ethylenedisulfonique (N° CAS 110-04-3), l' acide 1,3-Propanedisulfonique (21668-77-9)

Par exemple, à titre de composés polyacides sulfoniques disponibles dans le commerce et utiles aux besoins de l'invention, on peut citer : l'acide 1,2-Ethylenedisulfonique, l'acide Butane-1,4-disulfonique (N° 1588441-14-8) et l'acide 1,3-Propanedisulfonique de la société ABCR.

Le système de réticulation selon l'invention contient également, à titre de composé essentiel à l'invention, un composé polyphénol comprenant au moins un cycle aromatique comprenant 6 atomes de carbone et au moins deux fonctions hydroxyles -OH sur un même cycle aromatique en position vicinale.

Selon un mode de réalisation de l'invention, le composé polyphénol comprend un cycle aromatique ayant 6 atomes de carbone et au moins deux fonctions hydroxyles -OH vicinales et répond à la formule générale (III) 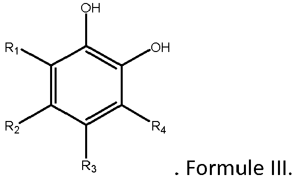 dans laquelle les groupements R₁, R₂, R₃, et R₄, indépendamment les uns des autres, désignent des groupements choisis parmi l'atome d'hydrogène, les radicaux hydroxyle, thiol, hydroxyalkényle, carboxyle, hydrogénocarbonyle, alkyle, carboxylalkyle, carboxylalkényle, carbonylalkyle, alkoxy, alkylthioxy, aryle, aryloxy, arylthioxy, arylcarbonyle, amino, aminoalkyle, éthers, esters, et thioesters.

Par groupe éther, on entend un groupe de formule -(CₙH₂ₙ₋₂)- O-alkyle. Par groupe ester, on entend un groupe de formule -(CₙH₂ₙ)-CO-O-alkyle, Par groupe thioester, on entend un groupe de formule -(CₙH₂ₙ)-CO-S-alkyle. n est tel que définit plus haut.

Par groupe carboxyle, ou fonction acide carboxylique, on entend un groupe de formule -COOH dans lequel l'atome de carbone est lié par une double liaison à un atome d'oxygène et par une liaison simple à un groupe hydroxyle -OH.

Par groupe alkyle, on entend un groupe de formule -CₙH₂ₙ₊₁.

Par groupe hydrogénocarbonyle, on entend un groupe de formule -CHO dans lequel l'atome de carbone est lié par une double liaison à un atome d'oxygène et par une liaison simple à un atome d'hydrogène.

Par groupe carboxyalkényle, on entend un groupe de formule -(CₙH₂ₙ)-COOH. Par groupe carbonylalkyle, on entend un groupe de formule -(CₙH₂ₙ)-CHO. Par groupe hydroxyalkényle, on entend un groupe de formule -CₙH₂ₙ(OH).

Par groupe aryloxy, on entend un groupe de formule générale -O-Aryle, dans lequel un groupe aryle est lié à un atome d'oxygène. Par groupe arylthioxy, on entend un groupe de formule générale -S-Aryle, dans lequel un groupe aryle est lié à un atome de soufre. Par groupe arylcarbonyle, on entend un groupe de formule générale -CO-Aryle, dans lequel un groupe aryle est lié à un groupe carbonyle.

Par groupe amino, on entend un groupe de formule -NH₂.

Par radical aminoalkyle, on entend un radical de formule -CₙH₂ₙ-NH₂.

Par groupe ether, on entend un groupe de formule -(CₙH₂ₙ₋₂)ₓ- O-alkyle. Par groupe ester, on entend un groupe de formule -(CₙH₂ₙ)ₓ-CO-O-alkyle. Par groupe thioester, on entend un groupe de formule -(CₙH₂ₙ)ₓ-CO-S-alkyle. Dans ces définitions, x vaut 0 ou 1.

Dans les définitions précédentes, n est un entier, avantageusement compris entre 1 et 10, préférentiellement entre 1 et 6, très préférentiellement entre 1 et 4.

Selon ce mode de réalisation de l'invention, le composé polyphénol répond de préférence à la formule (III) dans laquelle R₁, R₂, R₃, et R₄, indépendamment les uns des autres, désignent des groupements choisis parmi l'atome d'hydrogène, les radicaux hydroxyle, carboxyle, ester. Plus préférentiellement encore, un ou deux de R₁ ou R₄ désigne un radical hydroxyle et un autre de R₁, R₂, R₃, et R₄ désigne un radical carboxyle ou ester, les autres désignant un atome d'hydrogène.

Dans les définitions précédentes, on entend par aryle un substituant aromatique comprenant de 6 à 14 atomes de carbone, de préférence 6 à 10 atomes de carbone, de préférence 6 atomes de carbone.

Parmi les composés polyphénols à un cycle aromatique utiles pour les besoins de l'invention, on peut citer l'acide gallique, le pyrogallol, le méthyl 3,4,5-trihydroxybenzoate, l'acide 3,4-dihydroxy benzoique. De manière très préférée le composé polyphénol est l'acide gallique.

Selon un autre mode de réalisation de l'invention, le composé polyphénol est un composé comprenant au moins deux et de préférence au moins trois cycles aromatiques comprenant chacun 6 atomes de carbone, chaque cycle comprenant au moins 2 fonctions hydroxyles -OH. La masse molaire en nombre du composé polyphénol est préférentiellement supérieure à 600 g/mol, préférentiellement supérieure à 800 g/mol, de manière préférée supérieure à 1000 g/mol et de manière très préférée supérieure à 1200 g/mol.

De manière préférée, le composé polyphénol est choisi parmi les gallotannins, c'est-à-dire des esters d'acide gallique et de polyol, le polyol étant de préférence choisi parmi les pentoses et les hexoses. De préférence, le composé polyphénol est choisi parmi les esters de glucose et d'acide gallique, de manière préférée choisi parmi les polygalloyl glucoses comprenant de 3 à 10 unités galloyles, de préférence comprenant de 5 à 10 unités galloyles. De manière préférée, le composé polyphénol est choisi parmi les trigalloyl glucoses, les pentagalloyl glucoses et les décagalloyl glucoses, et de préférence parmi le 1,2,6-Trigalloyl glucose, le 1,3,6-Trigalloyl glucose, le 1,2,3,4,6-Pentagalloyl-glucose et l'acide tannique (ou beta-D-5 Glucose pentakis(3,4-dihydroxy-5-((3,4,5-trihydroxybenzoyl)oxy)benzoate)). De manière très préférée le composé polyphénol est l'acide tannique.

Ces composés polyphénol utiles pour les besoins de l'invention sont disponibles dans le commerce. Par exemple, à titre de composés polyphénol disponibles dans le commerce et utiles aux besoins de l'invention, on peut citer ces mêmes composés commercialisés par la société Sigma-Aldrich.

Selon un mode de réalisation de l'invention, le système de réticulation selon l'invention peut contenir un imidazole. Un tel composé est connu de l'homme de l'art et notamment décrit dans les documents WO2014095582, WO2014095583, WO2014095585 et WO2014095586.

Selon ce mode de réalisation de l'invention, le taux d'imidazole est préférentiellement compris dans un domaine allant de 0,01 à 4,0 équivalents molaires, et de préférence de 0,01 à 3,0 équivalents molaires, par rapport aux fonctions acides présentes sur les composés polyacides de formules générales (I) et (II).

Les imidazoles utiles pour les besoin de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

Un système de réticulation comprenant au moins un composé polyacide, choisi parmi ceux de formule générale (I) et ceux de formule (II), et un imidazole pourrait être un système de réticulation dans lequel ledit composé polyacide et ledit imidazole auraient préalablement réagi ensemble avant leur introduction dans la composition.

Selon un autre mode de réalisation de l'invention, le système de réticulation selon l'invention ne contient pas d'imidazole. Selon ce mode de réalisation de l'invention, il est possible de manière surprenante et inattendue d'améliorer encore davantage les propriétés de réticulation d'une composition de caoutchouc comprenant un tel système de réticulation par rapport à une composition dont le système de réticulation selon l'invention contient un imidazole. Ainsi, de préférence, le système de réticulation de l'invention est dépourvu d'imidazole, ou contient moins de 0,01 équivalents molaires d'un imidazole, par rapport aux fonctions acides présentes sur le composé polyacide.

Le système de réticulation selon l'invention est apte à réticuler tout polymère époxydé, particulièrement un élastomère diénique époxydé, avec une cinétique significativement améliorée par rapport à un système de réticulation à base d'un même polyacide associé à un polyphénol ne possédant pas de fonctions -OH vicinales sur un même groupement aromatique.

Ainsi, l'invention a également pour objet une composition de caoutchouc comprenant un tel élastomère diénique époxydé et le système de réticulation décrit plus haut. Une telle composition de caoutchouc présente l'avantage d'un temps de cuisson réduit.

### Composition de caoutchouc de l'invention

La composition de caoutchouc selon l'invention contient au moins
- une matrice élastomère comprenant au moins un élastomère diénique comprenant des fonctions époxydes,
- une charge renforçante, et
- un système de réticulation dudit élastomère diénique époxydé tel que décrit ci-dessus.

### Elastomère diénique comprenant des fonctions époxydes (ou élastomère époxydé)

Par élastomère ou caoutchouc (les deux termes étant de manière connue synonymes et interchangeables) diénique comprenant des fonctions époxydes ou époxydé, on rappelle que doit être entendu au sens large un élastomère synthétique ou naturel, lequel est fonctionnalisé, c'est-à-dire qu'il est porteur de groupes fonctionnels époxydes, que ceux-ci soient pendants le long de la chaîne élastomère ou dans la chaîne élastomère, y compris les extrémités de chaîne.

On préfère utiliser au moins un élastomère diénique, dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

De tels élastomères diéniques époxydés et leurs procédés d'obtention sont bien connus de l'homme du métier et disponibles commercialement. Des élastomères diéniques porteurs de groupes époxydes ont été décrits par exemple dans EP 0763564 A1 ou EP 1403287 A1.

Les caoutchoucs naturels époxydés (en abrégé "ENR"), par exemple, peuvent être obtenus de manière connue par époxydation du caoutchouc naturel, par exemple par des procédés à base de chlorohydrine ou de bromohydrine ou des procédés à base de peroxydes d'hydrogène, d'alkyl hydroperoxydes ou de peracides (tel que acide peracétique ou acide performique) ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Cray Valley sous la dénomination "Poly Bd" (par exemple "Poly Bd 605E"). Les SBR époxydés peuvent être préparés par des techniques d'époxydation bien connues de l'homme du métier.

Préférentiellement, l'élastomère diénique époxydé est choisi dans le groupe constitué par les caoutchoucs naturels (NR) époxydés (en abrégé "ENR"), les polyisoprènes (IR) de synthèse époxydés, les polybutadiènes (BR) époxydés, les copolymères de butadiène-styrène (SBR) époxydés et les mélanges de ces élastomères. De préférence encore, l'élastomère diénique époxydé est choisi dans le groupe constitué par les polymères du butadiène époxydés et leurs mélanges, particulièrement l'élastomère diénique époxydé est un copolymère styrène-butadiène époxydé (SBR).

Le taux (% molaire) d'époxydation des élastomères diéniques époxydés précédemment décrits peut varier dans une large part selon les modes de réalisation particuliers de l'invention, de préférence d'au moins 0,2%, plus préférentiellement d'au moins 2%, et de préférence d'au plus 60%, plus préférentiellement d'au plus 50%, encore plus préférentiellement d'au plus 30%. Quand le taux d'époxydation est inférieur à 0,2%, l'effet technique visé risque d'être insuffisant tandis qu'au-delà de 60%, les propriétés d'élastomères risquent d'être dégradées. Pour toutes ces raisons, le taux d'époxydation est plus préférentiellement compris dans un domaine de 2% à 30%.

Les compositions de caoutchouc de l'invention peuvent contenir un seul élastomère diénique époxydé ou un mélange de plusieurs élastomères diéniques époxydés (qu'on notera alors au singulier comme étant « l'élastomère diénique époxydé » pour représenter la somme des élastomères époxydés de la composition).

De manière préférentielle, la composition de caoutchouc de l'invention est dépourvue d'élastomère diénique non époxydé. Dit autrement, l'élastomère diénique époxydé, au sens large de la somme des élastomères diéniques époxydés, est préférentiellement le seul élastomère diénique dans la composition de caoutchouc de l'invention.

### Charge renforçante

On peut utiliser tout type de charge renforçante connue pour ses capacités à renforcer une composition de caoutchouc utilisable pour la fabrication de pneus, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneus (noirs dits de grade pneu). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneus, en d'autres termes apte à remplacer, dans sa fonction de renforcement, un noir de carbone conventionnel de grade pneu ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil 7000" et "Ultrasil 7005" de la société Degussa, les silices "Zeosil" 1165MP, 1135MP et 1115MP de la société Rhodia, la silice "Hi-Sil EZ150G" de la société PPG, les silices "Zeopol" 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m2/g, plus préférentiellement comprise entre 60 et 300 m2/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneu vélo, par exemple, est bien sûr inférieur à celui exigé sur un pneu apte à rouler à grande vitesse de manière soutenue, par exemple un pneu moto, un pneu pour véhicule de tourisme ou pour véhicule utilitaire tel que Poids lourd.

Selon un mode de réalisation de l'invention, pour coupler la charge inorganique renforçante à l'élastomère diénique, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels. Selon ce mode de réalisation de l'invention, la teneur en agent de couplage est inférieure à 20 pce. Typiquement le taux d'agent de couplage représente de 0,5% à 15% en poids par rapport à la quantité de charge inorganique. Selon ce mode de réalisation, dans les compositions de caoutchouc, la teneur en agent de couplage est préférentiellement comprise entre 3 et 12 pce.

Selon un autre mode de réalisation de l'invention, les compositions de caoutchouc sont dépourvues d'agent de couplage, ou contient moins de 0,5% en poids par rapport à la quantité de charge inorganique.

Les compositions de caoutchouc peuvent également contenir des agents de recouvrement de la charge inorganique lorsqu'une charge inorganique est utilisée Ces agents de recouvrement sont bien connus (voir par exemple les demandes de brevet WO 2006/125533, WO 2007/017060, WO 2007/003408, WO 2009/062733 et EP 0 784 072). On citera par exemple des hydroxysilanes ou des silanes hydrolysables tels que des hydroxysilanes, des alkylalkoxysilanes, notamment des alkyltriéthoxysilanes comme par exemple le 1-octyl-tri-éthoxysilane.

Dans les compositions de caoutchouc conformes à l'invention, la teneur en agent de recouvrement est inférieure à 20 pce. Typiquement le taux d'agent de recouvrement représente de 0,5% à 15% en poids par rapport à la quantité de charge inorganique. Dans les compositions de caoutchouc conformes à l'invention, la teneur en agent de recouvrement est préférentiellement comprise entre 3 et 12 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent pour faciliter la dispersion de la charge dans la composition de caoutchouc.

### Système de réticulation

Le système de réticulation est tel que décrit plus haut dans tous ces modes de réalisation.

Le taux de composé polyacide dans la composition de caoutchouc selon l'invention est préférentiellement d'au moins 0,2 et d'au plus 20 pce, d'au plus 10 pce, notamment de préférence compris dans un domaine allant de 0,2 à 10 pce. En dessous de 0,2 pce de composé polyacide, l'effet de la réticulation n'est pas sensible tandis qu'au-delà de 20 pce de composé polyacide, l'interaction gomme-charge peut être pénalisée ou encore la rigidité de la composition peut être réduite.

Le taux de polyphénol dans la composition selon l'invention est préférentiellement d'au moins 0,2 pce, de préférence d'au moins 0,5 pce, et d'au plus 50 pce, de préférence d'au plus 25 pce. En dessous de 0,2 pce de composé polyphénol, l'effet sur la cinétique de réticulation ne serait pas mesurable, tandis qu'au-delà de 25 pce de composé polyphénol des réactions parasites pourraient avoir lieu dégradant la cinétique de cuisson,. Le taux de polyphénol est plus particulièrement compris dans un domaine allant de 0,2 à 50, de préférence de 0.5 à 25 pce.

### Autres additifs

Les compositions de caoutchouc des pneus conformes à l'invention peuvent comporter également tout ou partie des additifs usuels habituellement utilisés dans les compositions d'élastomères destinées à la fabrication de pneus, comme par exemple des pigments, des agents de protection tels que cires anti-ozone, anti-ozonants chimiques, anti-oxydants, des agents anti-fatigue, des agents de réticulation autres que ceux précités, des résines renforçantes ou des agents plastifiants. De préférence, cet agent plastifiant est une résine hydrocarbonée solide (ou résine plastifiante), une huile d'extension (ou huile plastifiante), ou un mélange des deux.

De manière préférentielle, les compositions de caoutchouc de l'invention sont dépourvues de système de réticulation autre que celui décrit précédemment, et qui comporte un composé poly-hémiphosphoester. Dit autrement, le système de réticulation à base d'au moins un composé poly-hémiphosphoester est préférentiellement le seul système de réticulation dans la composition de caoutchouc de l'invention. De préférence, les compositions de l'invention sont dépourvues de système de vulcanisation, ou contiennent moins de 1 pce de soufre, de préférence moins de 0,5 pce et plus préférentiellement moins de 0,2 pce. De même la composition est préférentiellement dépourvue de tout accélérateur de vulcanisation, tels qu'ils sont connus de l'homme du métier, ou en contient moins de 1 pce, de préférence moins de 0,5 pce et plus préférentiellement moins de 0,2 pce.

De même la composition est préférentiellement dépourvue de tout accélérateur ou activateur de vulcanisation, tels qu'ils sont connus de l'homme du métier, ou en contient moins de 1 pce, de préférence moins de 0,5 pce et plus préférentiellement moins de 0,2 pce. En particulier, la composition de caoutchouc selon l'invention est préférentiellement dépourvue de zinc ou d'oxyde de zinc, ou en contient moins de 1 pce, de préférence moins de 0,5 pce et de manière très préférée moins de 0,2 pce. En particulier également, la composition de caoutchouc selon l'invention est préférentiellement dépourvue d'acide stéarique, ou en contient moins de 1 pce, de préférence moins de 0,5 pce et de manière très préférée moins de 0,2 pce

### Préparation des compositions de caoutchouc

Les compositions de caoutchouc de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 180°C, de préférence entre 130 et 160°C, suivie d'une seconde phase de travail mécanique (phase dite "productive") jusqu'à une plus basse température, typiquement inférieure à 110°C, par exemple entre 40°C et 100°C, phase de finition au cours de laquelle peut être incorporé le système de réticulation.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication du pneu de l'invention.

La composition de caoutchouc selon l'invention peut être utilisée dans différentes parties dudit pneu, ce dernier constituant également un objet de l'invention.

### Exemple

### 1. Tests

### 1.a - Préparation des compositions

On procède pour les essais qui suivent de la manière suivante : on introduit dans un mélangeur interne (taux de remplissage final : environ 70% en volume), successivement l'élastomère époxydé, la charge renforçante, et les autres additifs. On conduit alors un travail thermomécanique (phase non-productive) en une étape, qui dure au total environ 3 à 4 min, jusqu'à atteindre une température maximale de « tombée » allant de 130°C à 165°C selon les compositions. On récupère le mélange ainsi obtenu, on le refroidit puis on ajoute le système de réticulation à base d'un poly-acide (sulfonique ou hemiphosphoester) et d'un composé polyphénol, ainsi que le cas échéant d'un imidazole. Les compositions sont ensuite calandrées soit sous la forme de plaques (épaisseur de 2 à 3 mm) ou de feuilles fines de caoutchouc pour la mesure. Les compositions de caoutchouc sont caractérisées comme indiqué ci-après.

### 1.b - Rhéométrie et détermination de la constante de vitesse de réticulation

Pour déterminer les cinétique de réticulation associée à chaque système de réticulation de l'invention, des mesures de rhéométrie ont été effectuées respectivement à 160°C ou à 180°C avec un rhéomètre à chambre oscillante. L'évolution du couple rhéométrique, Δcouple (en dN.m), en fonction du temps décrit l'évolution de la rigidification de la composition par suite de la réaction de réticulation (courbe de cuisson ou rhéogramme). La constante de vitesse de réticulation à l'initiale (en dN.m.min⁻¹), notée k, permet d'apprécier la cinétique de réticulation. Cette dernière est déterminée graphiquement en traçant la tangente à la courbe de cuisson à l'origine sur le rhéogramme de cuisson à 160°C et sur le rhéogramme de cuisson à 180°C. La constante de vitesse de réticulation à l'initiale correspond donc au coefficient directeur de cette tangente de la courbe de cuisson à l'origine.

### 2. Compositions et Résultats

Les compositions selon l'invention présentent une facilité de préparation et une simplicité supérieure à une composition de caoutchouc conventionnelle, tout en améliorant également la cinétique de cuisson de ces compositions par rapport aux compositions comprenant un système de réticulation à base d'un même diacide mais en lui associant un polyphénol ne possédant pas deux fonctions -OH vicinales sur un même groupement aromatique.

### 2.a - En mélange comprenant du noir de carbone comme charge renforçante :

Pour cela, des compositions de caoutchouc ont été préparées comme indiqué précédemment, dont certaines conformes à l'invention (P2, P3, P4 et P5, d'une part, et S2, S3, S4 et S5, d'autre part) et une non conforme comprenant un système de réticulation à base d'un même diacide et d'un polyphénol non conforme (témoin TP1 et TS1) comme indiqué aux tableaux 1, les quantités étant exprimées en parties en poids.

Les constantes de vitesse de cuisson des compositions ont été mesurées comme indiqué précédemment et les résultats sont indiqués dans les tableaux 2a et 2b.

**Tableau 1**

| **Composants** | **TP1** | **TS1** | **P2** | **S2** | **P3** | **S3** | **P4** | **S4** | **P5** | **S5** |
|---|---|---|---|---|---|---|---|---|---|---|
| ENR (1) | 100 | 100 | 100 | 100 | 100 | 100 | 100 | 100 | 100 | 100 |
| Noir (2b) | 50 | 50 | 50 | 50 | 50 | 50 | 50 | 50 | 50 | 50 |
| 6PPD (4) | 1.5 | 1.5 | 1.5 | 1.5 | 1.5 | 1.5 | 1.5 | 1.5 | 1.5 | 1.5 |
| Hemiester bisphosphonique (5a) | 2.1 | | 2.1 | | 2.1 | | 2.1 | | 2.1 | |
| Diacide Sulfonique (5b) | | 124 | | 1.24 | | 1.24 | | 1.24 | | 1.24 |
| Acide Gallique (6) | | | 4.7 | 4.7 | | | | | | |
| pyrogallol (7) | | | | | 3.48 | 3.48 | | | | |
| 3,4 dihydroxybenzoic acid (8) | | | | | | | 4.26 | 4.26 | | |
| Phloroglucinol (9) | 3.48 | 3.48 | | | | | | | | |
| méthyl-3,4,5-trihydroxybenzoate (10) | | | | | | | | | 5.09 | 5.09 |

| | | | | | | | | | | |
|---|---|---|---|---|---|---|---|---|---|---|
| (1) ENR 25 mol% époxy, de la société Guthrie (2) Noir N326 (3) « Dynasylan Octeo » de la société Degussa (4) N-1.3-diméthylbutyl-N-phénylparaphénylènediamine (Santoflex 6-PPD de la société Flexsys) (5) Polyacide a-Hemiester bisphosphonique 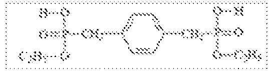 M= 322.34 g/mol synthétisé selon le mode opératoire décrit dans Molécules 2015, 20, 14435-14450; doi:10.3390/molecules200814435; b-Polyacide sulfonique : acide 1.2-éthanedisulfonique dihydraté M=190.18 g/mol CAS 110-04-3 de la société ABCR (6) Acide gallique CAS : 149-91-7 de la société Sigma-Aldrich (7) Pyrogallol CAS : 87-66-1 de la société Sigma-Aldrich (8) 3,4-Dihydroxybenzoic acid CAS : 99-50-3 de la société Sigma-Aldrich (9) Phloroglucinol CAS : 108-73-6 de la société Sigma-Aldrich (10) Methyl 3,4,5-trihydroxybenzoate CAS : 99-24-1 de la société Sigma-Aldrich | | | | | | | | | | |

**Tableau 2a**

| **COMPOSITIONS** | **TP1** | **P2** | **P3** | **P4** | **P5** |
|---|---|---|---|---|---|
| Constante de vitesse k à 160°C | 0.29 | 0.76 | 0.87 | 0.88 | 1.13 |
| constante de vitesse k à 180°C | 0.87 | 2.03 | 2.21 | 2.09 | 2.11 |

| | | | | | |
|---|---|---|---|---|---|
| *avec k en m.dN.min⁻¹* | | | | | |

**Tableau 2b**

| **COMPOSITIONS** | **TS1** | **S2** | **S3** | **S4** | **S5** |
|---|---|---|---|---|---|
| Constante de vitesse k à 160°C | 0.80 | 1.62 | 0.82 | 1.25 | 1.11 |
| constante de vitesse k à 180°C | 1.13 | 1.68 | 1.20 | 1.21 | 1.58 |

| | | | | | |
|---|---|---|---|---|---|
| *avec k en m.dN.min⁻¹* | | | | | |

A 160°C, l'accélération de la cinétique est observée lorsque le polyphénol comporte au minimum 2 hydroxyles vicinaux sur le groupement aromatique du polyphénol. A 180°C, on observe le même constat en termes de cinétique de cuisson.

Les systèmes comportant un polyhemiphosphoester ou un polyacide sulfonique associés à un polyphénol possédant deux fonctions -OH sur un même groupement aromatique en position vicinale présentent des cinétiques de cuisson améliorées par rapport à un système à base d'un même polyacide associé à un polyphénol ne possédant pas de fonctions -OH vicinales sur un même groupement aromatique.

### 2.b - En mélange comprenant de la silice comme charge renforçante :

Pour cela, des compositions de caoutchouc ont été préparées comme indiqué précédemment, dont certaines conformes à l'invention (P7, P8, P9 et P10, d'une part, et S7 d'autre part) et une non conforme comprenant un système de réticulation à base d'un même diacide et d'un polyphénol non conforme (témoin TP6 et TS6) comme indiqué au tableau 3, les quantités étant exprimées en parties en poids.

Les constantes de vitesse de cuisson des compositions ont été mesurées comme indiqué précédemment et les résultats sont indiqués dans les tableaux 4a pour l' hémiester bisphosphonique et 4b pour le diacide sulfonique.

**Tableau 3**

| Composants | TP6 | P7 | P8 | P9 | P10 | TS6 | S7 |
|---|---|---|---|---|---|---|---|
| ENR (1) | 100 | 100 | 100 | 100 | 100 | 100 | 100 |
| silice (2) | 60 | 60 | 60 | 60 | 60 | 60 | 60 |
| Silane (3) | 4.8 | 4.8 | 4.8 | 4.8 | 4.8 | 4.8 | 4.8 |
| 6PPD (4) | 1.5 | 1.5 | 1.5 | 1.5 | 1.5 | 1.5 | 1.5 |
| Hemiester bisphosphonique (5a) | 2.1 | 2.1 | 2.1 | 2.1 | 2.1 | | |
| Diacide Sulfonique (5b) | | | | | | 1.24 | 1.24 |
| Acide Gallique (6) | | 4.7 | | | | | |
| pyrogallol (7) | | | 3.48 | | | | |
| 3,4 dihydroxybenzoic acid (8) | | | | 4.26 | | | |
| Phloroglucinol (9) | 3.48 | | | | | 3.48 | |
| méthyl-3,4,5-trihydroxybenzoate (10) | | | | | 5.09 | | |
| Acide tannique (11) | | | | | | | 2.65 |

| | | | | | | | |
|---|---|---|---|---|---|---|---|
| (1) ENR 25 mol% époxy, de la société Guthrie (2) Silice 160MP, « Zeosil 1165MP » de la société Rhodia (3) « Dynasylan Octeo » de la société Degussa (4) N-1.3-diméthylbutyl-N-phénylparaphénylènediamine (Santoflex 6-PPD de la société Flexsys) (5) Polyacide a- Hemiester bisphosphonique 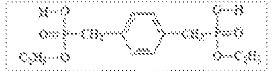 M= 322.34 g/mol synthétisé selon le mode opératoire décrit dans Molécules 2015, 20, 14435-14450; doi:10.3390/molecules200814435; b- Polyacide sulfonique : acide 1.2-éthanedisulfonique dihydraté M=190.18 g/mol CAS 110-04-3 de la société ABCR, (6) Acide gallique CAS : 149-91-7 de la société Sigma-Aldrich (7) Pyrogallol CAS : 87-66-1 de la société Sigma-Aldrich (8) 3,4-Dihydroxybenzoic acid CAS : 99-50-3 de la société Sigma-Aldrich (9) Phloroglucinol CAS : 108-73-6 de la société Sigma-Aldrich (10) Methyl 3,4,5-trihydroxybenzoate CAS : 99-24-1 de la société Sigma-Aldrich (11) Acide tannique CAS : 1401-55-4 de la société Sigma-Aldrich | | | | | | | |

**Tableau 4a**

| **compositions** | TP6 | P7 | P8 | P9 | P10 |
|---|---|---|---|---|---|
| constante de vitesse k à 160°C | 0.80 | 0.82 | 1.53 | 0.83 | 1.09 |
| constante de vitesse k à 180°C | 1.56 | 1.67 | 1.64 | 1.70 | 1.71 |

| | | | | | |
|---|---|---|---|---|---|
| *avec k en m.dN.min⁻¹* | | | | | |

**Tableau 4b**

| **compositions** | **TS6** | **S7** |
|---|---|---|
| constante de vitesse k à 160°C | 0.92 | 1,86 |
| constante de vitesse k à 180°C | 2.02 | 2,81 |

| | | |
|---|---|---|
| *avec k en m.dN.min⁻¹* | | |

A 160°C, en mélange à base de silice, l'accélération de la cinétique est observée lorsque les systèmes comportent un polyhemiphosphoester associés à un polyphénol possédant deux -OH vicinaux. A 180°C, on observe le même constat en termes de cinétique de cuisson.

Il en est de même lorsque les systèmes comportent un polyacide sulfonique associé à l'acide tannique. A 160°C, en mélange à base de silice, une accélération de la cinétique est observée. A 180°C, on observe le même constat en termes de cinétique de cuisson.

Là encore, les systèmes comportant un polyhemiphosphoester ou un polyacide sulfonique associés à un polyphénol comprenant au moins un cycle aromatique de 6 atomes de carbone et possédant au moins deux -OH vicinaux présentent des cinétiques de cuisson améliorées par rapport à un systèmes à base d'un même polyacide associé à un polyphénol ne possédant pas de fonctions -OH sur un même groupement aromatique en position vicinale.

### 2.C - Effet de l'imidazole :

Pour cela, des compositions de caoutchouc ont été préparées comme indiqué précédemment, dont certaines comprenant un système de réticulation à base d'un diacide et d'un polyphénol possédant au moins deux fonctions -OH sur un même groupement aromatique en position vicinale ainsi qu'un composé imidazole (P2, d'une part, et S2, d'autre part) d'autres comprenant un système de réticulation à base d'un même diacide et d'un même polyphénol ainsi qu'un composé imidazole (Plm2 et Slm2), comme indiqué au tableau 5, les quantités étant exprimées en parties en poids.

Les constantes de vitesse de cuisson des compositions ont été mesurées comme indiqué précédemment et les résultats sont indiqués dans le tableau 6.

**Tableau 5**

| Composants | P2 | Plm2 | S2 | Slm2 |
|---|---|---|---|---|
| ENR (1) | 100 | 100 | 100 | 100 |
| Noir (2) | 50 | 50 | 60 | 60 |
| 6PPD (3) | 1.5 | 1.5 | 1.5 | 1.5 |
| Hemiester bisphosphonique (4a) | 2.1 | 2.1 | | |
| Diacide Sulfonique (4b) | | | 1.24 | 1.24 |
| Imidazole (5) | | 2.24 | | 2.24 |
| Acide Gallique (6) | 4.7 | 4.7 | 4.7 | 4.7 |

| | | | | |
|---|---|---|---|---|
| (1) ENR 25 mol% époxy, de la société Guthrie (2) Noir N326 (3) N-1.3-diméthylbutyl-N-phénylparaphénylènediamine (Santoflex 6-PPD de la société Flexsys) (4) Polyacide a-Hemiester bisphosphonique 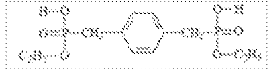 M= 322.34 g/mol synthétisé selon le mode opératoire décrit dans Molécules 2015, 20, 14435-14450; doi:10.3390/molecules200814435; b-Polyacide sulfonique : acide 1.2-éthanedisulfonique dihydraté M=190.18 g/mol CAS 110-04-3 de la société ABCR, (5) 1-benzyl-2-méthylimidazole CAS : 13750-62-4 de la société Sigma-Aldrich (6) Acide gallique CAS : 149-91-7 de la société Sigma-Aldrich | | | | |

**Tableau 6**

| | **Hemiester bisphosphonique** | | **Diacide Sulfonique** | |
|---|---|---|---|---|
| **compositions** | **P2** | **Plm2** | **S2** | **Slm2** |
| constante de vitesse k à 160°C | 0.76 | 0.11 | 1.62 | 0.82 |
| constante de vitesse k à 180°C | 2.03 | 0.48 | 1.68 | 1.3 |

À 160°C, on peut clairement noter que l'utilisation d'imidazole couplé aux systèmes de réticulation selon l'invention comprenant comportant un polyhemiphosphoester ou un polyacide sulfonique associé à de l'acide gallique pénalise la cinétique de cuisson de la composition de caoutchouc contenant ces systèmes de réticulation. A 180°C, on observe le même constat.

Les systèmes de réticulation comportant un polyhemiphosphoester ou un polyacide sulfonique associés à un polyphénol possédant au moins deux -OH sur un même groupement aromatique en position vicinale, confèrent aux compositions de caoutchouc les contenant des cinétiques de cuisson améliorées par rapport aux systèmes de réticulation comportant le même composé polyhemiphosphoester ou un polyacide sulfonique et un même polyphénol mais exempts de composés imidazoles.

## Revendications

1. Système de réticulation comprenant au moins
(a) un composé polyacide choisi parmi les composés organo polyphosphorés de formule générale (I) et les polyacides sulfoniques de formule générale (II), et
(b) un composé polyphénol comprenant au moins un cycle aromatique comprenant 6 atomes de carbone et au moins deux fonctions hydroxyles -OH vicinales 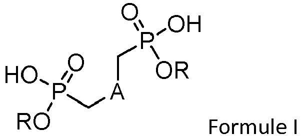 dans laquelle
- A représente une liaison covalente ou un groupement hydrocarboné comportant au moins 1 atome de carbone, éventuellement substitué et éventuellement interrompu par un ou plusieurs hétéroatomes, et
- les R représentent, indépendamment l'un de l'autre, un groupement hydrocarboné comportant au moins 1 atome de carbone ou un atome d'hydrogène. 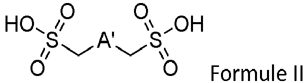 dans laquelle
- A' représente une liaison covalente ou un groupement hydrocarboné comportant au moins 1 atome de carbone, éventuellement substitué et éventuellement interrompu par un ou plusieurs hétéroatomes.

2. Système de réticulation selon la revendication 1, **caractérisé en ce que** A est un groupement hydrocarboné aromatique non substitué comportant de 6 à 12 atomes de carbone et ne comportant pas d'autre fonction phosphonique.

3. Système de réticulation selon l'une quelconque des revendications précédentes, **caractérisé en ce que** A' est une liaison covalente.

4. Système de réticulation selon l'une quelconque des revendications précédentes, **caractérisé en ce que** les R représentent, indépendamment l'un de l'autre, un atome d'hydrogène ou un groupement alkyle ayant de 1 à 20 atomes de carbone, de préférence 1 à 12 atomes de carbone, cycloalkyle ayant de 5 à 24 atomes de carbone, aryle ayant de 6 à 30 atomes de carbone ou aralkyle ayant de 7 à 25 atomes de carbone.

5. Système de réticulation selon l'une quelconque des revendications précédentes, **caractérisé en ce que** les R sont identiques et représentent un groupement alkyle ayant de 1 à 12 atomes de carbone, de préférence de 1 à 4 atomes de carbone.

6. Système de réticulation selon l'une quelconque des revendications précédentes, **caractérisé en ce que** le composé polyphénol comprend un cycle aromatique de 6 atomes de carbone et au moins deux fonctions hydroxyles -OH vicinales répondant à la formule générale (III) 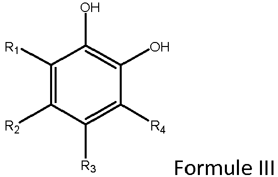 dans laquelle les groupements R1, R2 R3 et R4, indépendamment les uns des autres, désignent des groupements choisis parmi l'atome d'hydrogène, les radicaux hydroxyle, thiol, hydroxyalkényle, carboxyle, hydrogénocarbonyle, alkyle, carboxylalkyle, carboxylalkényle, carbonylalkyle, aryle, aryloxy, arylthioxy, arylcarbonyle, amino, aminoalkyle, éthers, esters, thioesters.

7. Système de réticulation selon l'une quelconque des revendications 1 à 5, **caractérisé en ce que** le composé polyphénol est un composé comprenant au moins deux, de préférence au moins trois cycles aromatiques comprenant 6 atomes de carbone, chaque cycle comprenant au moins 2 fonctions hydroxyles -OH vicinales.

8. Système de réticulation selon la revendication précédente, **caractérisé en ce que** le composé polyphénol est l'acide tannique.

9. Système de réticulation selon l'une quelconque des revendications précédentes, **caractérisé en ce que** le système de réticulation est dépourvu d'imidazole ou contient moins de 0,01 équivalents molaires d'un imidazole, par rapport aux fonctions acides présentes sur le composé polyacide.

10. Composition de caoutchouc contenant au moins
- une matrice élastomère comprenant au moins un élastomère diénique comprenant des fonctions époxydes,
- une charge renforçante, et
- un système de réticulation dudit polymère époxydé tel que défini dans l'une quelconque des revendications précédentes.

11. Composition de caoutchouc selon la revendication précédente, **caractérisée en ce que** le taux de composés polyacides choisis parmi les composés organo polyphosphorés de formule générale (I) et les polyacides sulfoniques de formule générale (II) est d'au moins 0,2 et d'au plus 20 pce, de préférence d'au plus 10 pce.

12. Composition de caoutchouc selon l'une quelconque des revendications 10 à 11, **caractérisée en ce que** le taux de polyphénol est d'au moins 0,2 pce, de préférence au moins 0,5 pce, et d'au plus 50 pce, de préférence au plus 25 pce.

13. Composition de caoutchouc selon l'une quelconque des revendications 10 à 12, **caractérisée en ce que** la charge renforçante comporte majoritairement du noir de carbone, de préférence le système de réticulation comprend au moins un composé organo polyphosphoré de formule générale (I).

14. Composition de caoutchouc selon l'une quelconque des revendications 10 à 12, **caractérisée en ce que** la charge renforçante comporte majoritairement de la silice et le système de réticulation comprend au moins un composé organo polyphosphoré de formule générale (I).

15. Composition de caoutchouc selon l'une quelconque des revendications 10 à 12, **caractérisée en ce que** la charge renforçante comporte majoritairement de la silice et le système de réticulation comprend au moins un composé polyacide sulfonique de formule générale (II) et un composé polyphénol comprenant au moins deux, de préférence au moins trois cycles aromatiques comprenant 6 atomes de carbone, chaque cycle comprenant au moins 2 fonctions hydroxyles -OH vicinales, de préférence l'acide tannique.

## Patentansprüche

1. Vernetzungssystem, das zumindest Folgendes umfasst
(a) eine Polysäureverbindung, die aus den Polyorganophosphorverbindungen der allgemeinen Formel (I) und den Polysulfonsäuren der allgemeinen Formel (II) ausgewählt ist, und
(b) eine Polyphenolverbindung, die mindestens einen aromatischen Ring umfasst, welcher 6 Kohlenstoffatome und mindestens zwei benachbarte funktionelle Hydroxylgruppen -OH umfasst 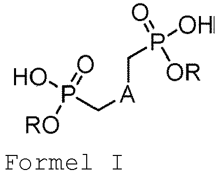 in welcher
- A für eine kovalente Bindung oder eine Kohlenwasserstoffgruppe steht, die mindestens 1 Kohlenstoffatom aufweist, wobei sie möglicherweise substituiert ist und möglicherweise von einem oder mehreren Heteroatomen unterbrochen ist, und
- die R unabhängig voneinander für eine Kohlenwasserstoffgruppe stehen, die mindestens 1 Kohlenstoffatom oder ein Wasserstoffatom aufweist. 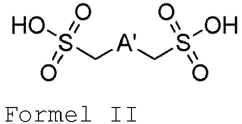 in welcher
- A' für eine kovalente Bindung oder eine Kohlenwasserstoffgruppe steht, die mindestens 1 Kohlenstoffatom aufweist, wobei sie möglicherweise substituiert ist und möglicherweise von einem oder mehreren Heteroatomen unterbrochen ist.

2. Vernetzungssystem nach Anspruch 1, **dadurch gekennzeichnet, dass** A eine unsubstituierte aromatische Kohlenwasserstoffgruppe ist, die 6 bis 12 Kohlenstoffatome aufweist und keinerlei weitere funktionelle Phosphonsäuregruppen aufweist.

3. Vernetzungssystem nach einem beliebigen der vorhergehenden Ansprüche, **dadurch gekennzeichnet, dass** A' eine kovalente Bindung ist.

4. Vernetzungssystem nach einem beliebigen der vorhergehenden Ansprüche, **dadurch gekennzeichnet, dass** die R unabhängig voneinander für ein Wasserstoffatom oder eine Gruppe des Typs Alkyl mit 1 bis 20 Kohlenstoffatomen, vorzugsweise 1 bis 12 Kohlenstoffatomen, Cycloalkyl mit 5 bis 24 Kohlenstoffatomen, Aryl mit 6 bis 30 Kohlenstoffatomen oder Aralkyl mit 7 bis 25 Kohlenstoffatomen stehen.

5. Vernetzungssystem nach einem beliebigen der vorhergehenden Ansprüche, **dadurch gekennzeichnet, dass** die R vollkommen gleichartig sind und für eine Alkylgruppe mit 1 bis 12 Kohlenstoffatomen, vorzugsweise 1 bis 4 Kohlenstoffatomen, stehen.

6. Vernetzungssystem nach einem beliebigen der vorhergehenden Ansprüche, **dadurch gekennzeichnet, dass** die Polyphenolverbindung einen aromatischen Ring mit 6 Kohlenstoffatomen und mindestens zwei benachbarte funktionelle Hydroxylgruppen -OH umfasst, wobei sie der allgemeinen Formel (III) entspricht 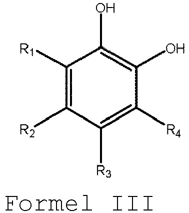 In welcher zumindest die Gruppen R1, R2, R3 und R4, unabhängig voneinander, für Gruppen stehen, die aus dem Wasserstoffatom, den Resten Hydroxyl, Thiol, Hydroxyalkenyl, Carboxyl, Hydrogencarbonyl, Alkyl, Carboxylalkyl, Carboxylalkenyl, Carbonylalkyl, Aryl, Aryloxy, Arylthioxy, Arylcarbonyl, Amino, Aminoalkyl, den Ethern, Estern, Thioestern ausgewählt sind.

7. Vernetzungssystem nach einem beliebigen der Ansprüche 1 bis 5, **dadurch gekennzeichnet, dass** es sich bei der Polyphenolverbindung um eine Verbindung handelt, die mindestens zwei, vorzugsweise drei aromatische Ringe umfasst, welche 6 Kohlenstoffatome umfassen, wobei jeder Ring mindestens 2 benachbarte funktionelle Hydroxylgruppen -OH umfasst.

8. Vernetzungssystem nach dem vorhergehenden Anspruch, **dadurch gekennzeichnet, dass** es sich bei der Polyphenolverbindung um Tanninsäure handelt.

9. Vernetzungssystem nach einem beliebigen der vorhergehenden Ansprüche, **dadurch gekennzeichnet, dass** das Vernetzungssystem frei von Imidazol ist oder weniger als 0,01 Moläquivalente eines Imidazols enthält, bezogen auf die funktionellen Säuregruppen, welche an der Polysäureverbindung vorliegen.

10. Kautschukzusammensetzung, die zumindest Folgendes enthält
- eine Elastomermatrix, die mindestens ein Dien-Elastomer umfasst, welches funktionelle Epoxygruppen umfasst,
- einen verstärkenden Füllstoff, und
- ein System zur Vernetzung des epoxidartigen Polymers gemäß der Begriffsbestimmung in einem beliebigen der vorhergehenden Ansprüche.

11. Kautschukzusammensetzung nach dem vorhergehenden Anspruch, **dadurch gekennzeichnet, dass** der Gehalt an Polysäureverbindungen, welche aus den Polyorganophosphorverbindungen der allgemeinen Formel (I) und den Polysulfonsäuren der allgemeinen Formel (II) ausgewählt sind, mindestens 0,2 und höchstens 20 phr, vorzugsweise höchstens 10 phr, beträgt.

12. Kautschukzusammensetzung nach einem beliebigen der Ansprüche 10 bis 11, **dadurch gekennzeichnet, dass** der Gehalt an Polyphenol mindestens 0,2 phr, vorzugsweise mindestens 0,5 phr, und höchstens 50 phr, vorzugsweise höchstens 25 phr, beträgt.

13. Kautschukzusammensetzung nach einem beliebigen der Ansprüche 10 bis 12, **dadurch gekennzeichnet, dass** der verstärkende Füllstoff überwiegend Ruß aufweist, wobei das Vernetzungssystem vorzugsweise mindestens eine Polyorganophosphorverbindung der allgemeinen Formel (I) umfasst.

14. Kautschukzusammensetzung nach einem beliebigen der Ansprüche 10 bis 12, **dadurch gekennzeichnet, dass** der verstärkende Füllstoff überwiegend Siliciumdioxid aufweist und das Vernetzungssystem mindestens eine Polyorganophosphorverbindung der allgemeinen Formel (I) umfasst.

15. Kautschukzusammensetzung nach einem beliebigen der Ansprüche 10 bis 12, **dadurch gekennzeichnet, dass** der verstärkende Füllstoff überwiegend Siliciumdioxid aufweist und das Vernetzungssystem mindestens eine Polysulfonsäureverbindung der allgemeinen Formel (II) sowie eine Polyphenolverbindung umfasst, die mindestens zwei, vorzugsweise drei aromatische Ringe umfasst, welche 6 Kohlenstoffatomen umfassen, wobei jeder der Ringe mindestens 2 benachbarte funktionelle Hydroxylgruppen - OH umfasst, wobei es sich vorzugsweise um Tanninsäure handelt.

## Claims

1. Crosslinking system comprising at least
(a) a polyacid compound selected from organopolyphosphorus compounds of general formula (I) and polysulfonic acids of general formula (II), and
(b) a polyphenol compound comprising at least one aromatic ring comprising 6 carbon atoms and at least two vicinal hydroxyl -OH functions; 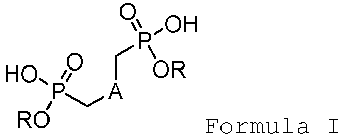 in which
- A represents a covalent bond or a hydrocarbon group comprising at least 1 carbon atom, which is optionally substituted and optionally interrupted by one or more heteroatoms, and
- the R symbols represent, independently of one another, a hydrocarbon group comprising at least 1 carbon atom or a hydrogen atom; 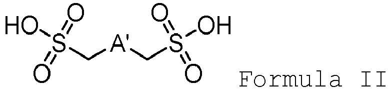 in which
- A' represents a covalent bond or a hydrocarbon group comprising at least 1 carbon atom, which is optionally substituted and optionally interrupted by one or more heteroatoms.

2. Crosslinking system according to Claim 1, **characterized in that** A is an unsubstituted aromatic hydrocarbon group comprising from 6 to 12 carbon atoms and not comprising another phosphonic function.

3. Crosslinking system according to either one of the preceding claims, **characterized in that** A' is a covalent bond.

4. Crosslinking system according to any one of the preceding claims, **characterized in that** the R symbols represent, independently of one another, a hydrogen atom or an alkyl group having from 1 to 20 carbon atoms, preferably 1 to 12 carbon atoms, a cycloalkyl group having from 5 to 24 carbon atoms, an aryl group having from 6 to 30 carbon atoms or an aralkyl group having from 7 to 25 carbon atoms.

5. Crosslinking system according to any one of the preceding claims, **characterized in that** the R symbols are identical and represent an alkyl group having from 1 to 12 carbon atoms, preferably from 1 to 4 carbon atoms.

6. Crosslinking system according to any one of the preceding claims, **characterized in that** the polyphenol compound comprises an aromatic ring of 6 carbon atoms and at least two vicinal hydroxyl -OH functions corresponding to the general formula (III) 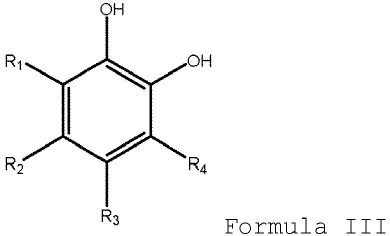 in which the R₁, R₂, R₃ and R₄ groups, independently of one another, denote groups selected from a hydrogen atom, the radicals hydroxyl, thiol, hydroxyalkenyl, carboxyl, hydrogenocarbonyl, alkyl, carboxylalkyl, carboxylalkenyl, carbonylalkyl, aryl, aryloxy, arylthioxy, arylcarbonyl, amino, aminoalkyl, ethers, esters, and thioesters.

7. Crosslinking system according to any one of Claims 1 to 5, **characterized in that** the polyphenol compound is a compound comprising at least two, preferably at least three, aromatic rings comprising 6 carbon atoms, each ring comprising at least 2 vicinal hydroxyl -OH functions.

8. Crosslinking system according to the preceding claim, **characterized in that** the polyphenol compound is tannic acid.

9. Crosslinking system according to any one of the preceding claims, **characterized in that** the crosslinking system is devoid of imidazole or contains less than 0.01 molar equivalents of an imidazole, relative to the acid functions present on the polyacid compound.

10. Rubber composition containing at least
- an elastomer matrix comprising at least one diene elastomer comprising epoxide functions,
- a reinforcing filler, and
- a system for crosslinking said epoxidized polymer as defined in any one of the preceding claims.

11. Rubber composition according to the preceding claim, **characterized in that** the content of polyacid compounds selected from the organopolyphosphorus compounds of general formula (I) and the polysulfonic acids of general formula (II) is at least 0.2 and at most 20 phr, preferably at most 10 phr.

12. Rubber composition according to either one of Claims 10 and 11, **characterized in that** the content of polyphenol is at least 0.2 phr, preferably at least 0.5 phr, and at most 50 phr, preferably at most 25 phr.

13. Rubber composition according to any one of Claims 10 to 12, **characterized in that** the reinforcing filler predominantly comprises carbon black, and preferably the crosslinking system comprises at least one organopolyphosphorus compound of general formula (I).

14. Rubber composition according to any one of Claims 10 to 12, **characterized in that** the reinforcing filler predominantly comprises silica and the crosslinking system comprises at least one organopolyphosphorus compound of general formula (I).

15. Rubber composition according to any one of Claims 10 to 12, **characterized in that** the reinforcing filler predominantly comprises silica and the crosslinking system comprises at least one polysulfonic acid compound of general formula (II) and a polyphenol compound comprising at least two, preferably at least three, aromatic rings comprising 6 carbon atoms, each ring comprising at least 2 vicinal hydroxyl -OH functions, preferably tannic acid.
